# EUROPEAN PATENT SPECIFICATION

(11) **EP 0 360 454 B1**
(45) Date of publication and mention of the grant of the patent: **28.12.1994**
(21) Application number: 89308980.5
(22) Date of filing: 05.09.1989
(51) Int. Cl.: C08F 4/02, C08F 4/16, C08F 4/64

(54) **Magnesium alkoxide polymerization catalyst by boiling in organic solvents**
Magnesiumalkoxyd-Polymerisationskatalysator, durch Kochen in organischen Lösungsmitteln
Catalyseur de polymérisation à base d'alkoxyde de magnésium, par bouillonnement dans des solvants organiques

(30) Priority: 06.09.1988 US 240300
(43) Date of publication of application: 28.03.1990
(73) Proprietor: SHELL OIL COMPANY, Houston Texas 77002 (US)
(72) Inventor: Job, Robert Charles, Houston Texas 77077 (US)
(74) Representative: Cresswell, Thomas Anthony

(56) References cited:
- EP-A- 0 250 244
- Römmps Chemie-Lexikon, Fränckh'sche Verlagshandlung, Stuttgart, 1985, Band 4, page 2567

## Description

This invention relates to a process for producing a supported polymerization catalyst component for use, in conjunction with for example an organo-aluminium compound, in the production of olefin polymers.

Experience has shown that the best magnesium halide-supported transition metal compound, particularly titanium tetrahalide, catalyst components for use in olefin polymerization are prepared via the metathesis of a suitable magnesium compound rather than by forceful mechanical and chemical treatment of a magnesium halide, such as magnesium chloride. Very good commercial polymerization catalyst components have been prepared via metathesis of, for example, a magnesium alkoxide using titanium tetrachloride in the presence of an ester and, optionally, a halohydrocarbon as disclosed in US-A-4,400,302 and US-A-4,414,132. However, the morphology of the catalyst components and the polymers produced using them is in need of improvement.

The present invention provides a process for improving the morphology of a polymerization catalyst component formed from a magnesium alkoxide which has bound alcohol. According to the invention there is provided a process for producing a supported polymerization catalyst component, which comprises treating a magnesium alkoxide selected from magnesium methoxide and magnesium ethoxide having bound alcohol with an inert solvent at or above the temperature at which the alcohol dissociates from the alkoxide, and subjecting the resulting magnesium alkoxide to metathesis with a halogen compound of a transition metal.

Due to the common method of manufacture, many magnesium alkoxides have bound alcohol (alcohol solvate). It has been found that bound alcohol can interfere with the metathesis reaction of the magnesium alkoxide with a halogen compound of a transition metal, such as titanium tetrahalide, preferably titanium tetrachloride, to form a magnesium halide, especially magnesium chloride, which is used as a support material in a procatalyst for an olefin polymerization catalyst. Magnesium methoxide (Mg(OMe)₂ 4MeOH) is an example of such a magnesium alkoxide.

When bound alcohol is removed by heating alone, the morphology of the procatalyst and the polymer produced using it is poor. For instance, magnesium methoxide does not metathesize well because as solvate methanol is thermally removed it catalyzes the polymerization of the magnesium methoxide to intractable [Mg(OMe)₂]ₙ. Thus, when bound alcohol is removed from magnesium alkoxides in a haphazard fashion, such as by heating in an inert atmosphere, the resulting procatalyst generally exhibits inferior morphology. If, however, the bound alcohol is removed by heating the magnesium alkoxide in an inert solvent at a temperature at or above the temperature at which the alcohol dissociates from the alkoxide prior to subjecting the magnesium alkoxide to metathesis, the problems of bound alcohol are eliminated and the morphology of the procatalyst and the polymer produced using it is excellent.

If the temperature utilized in the treatment with an inert solvent is lower than the temperature at which the alcohol dissociates from the Mg alkoxide, then alcohol will be left in the magnesium alkoxide to cause the problems discussed above and thus decrease the value of the procatalyst produced from the magnesium alkoxide. Ethanol, for instance, will dissociate from Mg ethoxide at about 105°C in the absence of a solvent or in the presence of a higher boiling point solvent. The treatment with an inert solvent is important to achieve good catalyst morphology. The solvent chosen when the alcohol is ethanol should have a boiling point no lower than 105°C. The boiling point will be different for different bound alcohols.

When there is used a lower boiling solvent, such as cyclohexane or kerosene, which forms a lower boiling azeotrope with the bound alcohol, especially methanol, the treatment temperature may be reduced. An azeotrope is preferred because it binds up the alcohol and thus helps to lessen other disadvantages such as catalysis of the polymerization of magnesium alkoxide to species which are difficult to metathesize. The removal of the alcohol in accordance with the invention should be carried out as quickly as possible to reduce its negative effects, i.e. in the case of methanol the degree of polymerization to [Mg(OMe)₂]ₙ.

The inert solvent used in the present invention may be any solvent which does not adversely affect the magnesium alkoxide and which will remove alcohol therefrom. Suitable solvents include isooctane, decalin, toluene, xylene, decane, kerosene, cyclohexane and tetralin. Tetraethoxysilane is a suitable inert solvent when the alkoxide is Mg ethoxide but not when it is Mg methoxide.

### Example I

Magnesium methoxide solutions (12%) were prepared by dissolving magnesium metal, by incremental addition, in methanol which contained 0.125 equivalents of tetramethoxy silane as a stabilizer. Crystalline Mg(OMe)₂.4MeOH was prepared by slow precipitation from stabilized magnesium methoxide solutions which had been concentrated by boiling. Pure magnesium methoxide was prepared from Mg(OMe)₂.4MeOH by removal of methanol solvate by drying in a stream of warm nitrogen (to obtain a non-boiled precursor) and also by azeotropic distillation from kerosene (190°C boiling point).

Pro-catalysts were prepared by stirring 50 to 60 mmols of the resulting magnesium compounds with 2.5 ml of isobutyl phthalate in 200 ml of 50/50 titanium tetrachloride/chlorobenzene for 1 hour at 115°C with that same solvent mixture. Excess titanium was removed by exhaustive isopentane rinses and each procatalyst was dried under moving nitrogen at 40°C. The procatalysts were used to polymerize propylene for 1 hour at 67°C in a 3.8 litre (1 US gallon) autoclave reactor in the liquid phase using a mixture of triethylaluminum and diisobutyldimethoxysilane as cocatalyst.

The procatalyst which was made from the nitrogen dried Mg(OMe)₂.4MeOH a technique which is outside the scope of this invention) had a productivity of only 7.6 kg of polypropylene per gram of catalyst/hr, the polypropylene having a xylene solubles of 8.1% and a bulk density of 0.34 g/cm³. The procatalyst which was made from Mg(OMe)₂.4MeOH desolvated by boiling in kerosene had a productivity of 29.1 kg of polypropylene per gram of catalyst/hr, the polypropylene having a xylene solubles of 4.5% and a bulk density of 0.43 g/cm³ and significantly fewer fine particles (those less than 120 µm). Thus, it is clearly shown that boiling in the organic solvent, kerosene, dramatically increased the productivity of the catalyst, decreased the xylene solubles and improved the morphology of the catalyst as evidenced by an increase in the bulk density and lower fines content.

### Example II

a) Non-boiled: Magnesium powder (50 mesh, 10 g, 0.41 mol) was slurried in 50 g of tetraethoxysilane (TEOS) and then 100 g of ethanol was added. Ferric chloride (1.9 mmol, 16% solution in ethanol) was added and the mixture slurried once more, then allowed to stand at room temperature. After standing overnight, the resulting voluminous granular precipitate was washed on a fritted glass funnel with three portions of isooctane and dried under moving nitrogen to yield a granular grey solid of about 200 µm average particle size. The precursor (8.2 g) was slurried in 200 ml of 50/50 (vol/vol) TiCl₄/chlorobenzene, then isobutyl phthalate (2.5 ml, 8.5 mmol) was added at room temperature. The gently stirring mixture was heated to 110°C and held for 1 hour. The mixture was filtered hot and then another 200 ml of the TiCl₄/chlorobenzene mixture was added along with phthaloyl chloride (0.42 ml, 2.9 mmol) and ethyl benzoate (0.37 ml, 2.6 mmol) and, with gentle stirring, the slurry was held at 110°C for another 1.0 hour and filtered hot. The solids were slurried in one final 200 ml portion of the TiCl₄/chlorobenzene solvent mix and stirred gently for 0.5 hour at 110°C. The mixture was filtered hot and then allowed to cool to 40°C before being washed with six 150 ml portions of isopentane. The resulting procatalyst was dried for 100 minutes under moving nitrogen at 40°C.
b) Solvent boiled: Next, a procatalyst was prepared according to the present invention. Magnesium powder (50 mesh, 6.1 g, 0.25 mol) was slurried in 85 g of ethanol, then 0.24 g of bromine (3.0 mmol) and 1.7 mmol of 16% ethanolic ferric chloride was added. After effervescence had become vigorous, 55 g of toluene was added and the mixture was placed into a 45°C oil bath and stirred vigorously. After 3 hours, 225 g of tetraethoxysilane was added and the rapidly stirring mixture was slowly heated to a pot temperature of 153°C at which point heating was stopped. The vessel was capped and the slurry was allowed to cool with rapid stirring. The mixture was filtered and the solids washed three times with isooctane then dried under moving nitrogen. The yield was 28.8 g (100% of theory). Microscopic examination revealed transparent particles in the 10 to 35 µm range with the average particle size about 17 µm. The TiCl₄/chlorobenzene/ester treatment was carried out as described in part a) of this Example.

The resulting procatalysts were used to polymerize propylene for 2 hours at 67°C, in liquid propylene in a 3.8 litre (1 US gallon) reactor, using a mixture of triethylaluminum and diphenyldimethoxysilane as cocatalyst. The procatalyst from the non-boiled precursor produced 36 Kg PP/g catalyst with an average particle size of 1344 µm (whereas an average particle size of 6600 µm was expected on the basis of average precursor particle size). The catalyst prepared according to this invention produced 63.2 Kg PP/g catalyst with an average particle size of 494 µm (where an average of 500 µm was expected). Thus, it is clearly shown that boiling in the organic solvent, tetraethoxysilane, dramatically increased the productivity of the catalyst and improved the morphology (as evidenced by obtaining polymer of predicted average particle size as opposed to only 20% of predicted particle size via the catalyst from the non-boiled precursor).

## Claims

1. A process for producing a supported polymerization catalyst component, which comprises treating a magnesium alkoxide selected from magnesium methoxide and magnesium ethoxide having bound alcohol with an inert solvent at or above the temperature at which the alcohol dissociates from the alkoxide, and subjecting the resulting magnesium alkoxide to metathesis with a halogen compound of a transition metal.

2. A process according to claim 1 wherein the alcohol is ethanol and the temperature is at least 105°C.

3. A process according to claim 1 or 2 wherein the solvent is at least one of kerosene, cyclohexane, isooctane, decalin, tetralin, toluene and xylene.

4. A process according to claim 1 or 2 wherein the magnesium alkoxide is magnesium ethoxide and the solvent is tetraethoxysilane.

5. A process according to any one of the preceding claims wherein the solvent forms an azeotrope with the bound alcohol.

6. A process according to any one of the preceding claims wherein titanium tetrachloride is used as the halogen compound of a transition metal.

## Patentansprüche

1. Verfahren zur Herstellung eines trägergestützten Polymerisierungskatalysatorbestandteils, das die Behandlung eines Magnesiumalkoxids ausgewählt aus Magnesiummethoxid und Magnesiumethoxid umfaßt und welches gebundenen Alkohol mit einem inerten Lösungsmittel aufweist, bei oder oberhalb einer Temperatur, bei der der Alkohol vom Alkoxid dissoziiert und bei dem das erhaltene Magnesiumalkoxid einer Metathese mit einer Halogenverbindung eines Übergangsmetalls unterworfen wird.

2. Verfahren nach Anspruch 1, wobei der Alkohol Ethanol ist und die Temperatur mindestens 105° C.

3. Verfahren nach Anspruch 1 oder 2, wobei das Lösungsmittel mindestens eines aus Kerosin, Cyclohexan, Isooctan, Decalin, Tetralin, Toluol und Xylol ist.

4. Verfahren nach Anspruch 1 oder 2, wobei das Magnesiumalkoxid Magnesiumethoxid ist und das Lösungsmittel Tetraethoxysilan ist.

5. Verfahren nach einem der vorstehenden Ansprüche, wobei das Lösungsmittel ein Azeotrop mit dem gebundenen Alkohol bildet.

6. Verfahren nach einem der vorstehenden Ansprüche, wobei Titantetrachlorid als die Halogenverbindung eines Übergangsmetalls eingesetzt wird.

## Revendications

1. Procédé de préparation d'un composant de catalyseur de polymérisation supporté, qui comprend les étapes consistant à traiter un alcoolate de magnésium, choisi parmi le méthylate de magnésium et l'éthylate de magnésium et ayant de l'alcool lié, avec un solvant inerte à une température supérieure ou égale à celle où l'alcool et l'alcoolate se dissocient, et à soumettre l'alcoolate de magnésium résultant à une métathèse avec un composé halogéné d'un métal de transition.

2. Procédé conforme à la revendication 1 dans lequel l'alcool est l'éthanol et la température est au moins égale à 105 °C.

3. Procédé conforme à la revendication 1 ou 2 dans lequel le solvant est au moins un solvant choisi parmi le kérosène, le cyclohexane, l'isooctane, la décaline, la tétraline, le toluène et le xylène.

4. Procédé conforme à la revendication 1 ou 2 dans lequel l'alcoolate de magnésium est l'éthylate de magnésium et le solvant est le tétraéthoxysilane.

5. Procédé conforme à une quelconque des revendications précédentes dans lequel le solvant forme un azéotrope avec l'alcool lié.

6. Procédé conforme à une quelconque des revendications précédentes dans lequel le tétrachlorure de titane est utilisé comme composé halogéné d'un métal de transition.
